# EUROPÄISCHE PATENTSCHRIFT

(11) **EP 0 751 050 B1**
(45) Veröffentlichungstag und Bekanntmachung des Hinweises auf die Patenterteilung: **05.01.2000**
(21) Anmeldenummer: 96109741.7
(22) Anmeldetag: 18.06.1996
(51) Int. Cl.: B60R 22/48

(54) **Biegeelement für die Auslöseanzeige eines Gurtstraffers**
Flexible element for triggering indication device of a seat belt prtensioner
Elément flexible pour un dispositif d'indication de déclenchement dans un dispositif de tendeur de ceinture

(30) Priorität: 28.06.1995 DE 19523413
(43) Veröffentlichungstag der Anmeldung: 02.01.1997
(73) Patentinhaber: Ticona GmbH, 65451 Kelsterbach (DE)
(72) Erfinder: Grolik, Walter, Dl., 64291 Darmstadt (DE); Hess, Jürgen, 64655 Alsbach-Hähnlein (DE); Mohr-Matuschek, Ulrich, Dr., 65779 Kelkheim (DE); Derichs, Wilfried, Dl., 55232 Alzey (DE); Mies, Karl, Dl., 65817 Eppstein (DE)

(56) Entgegenhaltungen:
- DE-U- 9 112 121
- DE-U- 9 300 430

## Beschreibung

Die Erfindung betrifft ein Biegeelement aus Kunststoff als Teil einer Auslöseanzeige eines Gurtstraffers bei Gurtschlössern für Sicherheitsgurte in Kraftfahrzeugen.

In der deutschen Gebrauchsmusteranmeldung mit dem Aktenzeichen G 91 12 121.3 vom 28.09.1991 mit dem Titel "Mit einem Gurtstraffer verbundenes Gurtschloß" wird ein Gurtschloß mit einem biegsamen Anzeigeteil, das den Auslösezustand des Gurtstraffers zu erkennen gibt, beschrieben. Die Biegsamkeit des Anzeigeteiles wird dadurch erreicht, daß ein Schaft eine Vielzahl von quer zu seiner Haupterstreckungsrichtung und in der Ebene des Gurtschlosses in ihn von beiden Seiten her hineinführende Schlitze aufweist. Die Biegsamkeit dieses Teiles ist nicht in allen Raumrichtungen gleich.

Auslöseanzeigen weisen bisher folgende wesentlichen Nachteile auf:
- Sie sind so ausgelegt, daß sie nur in einer Ebene eine ausreichende Flexibilität aufweisen. Dies führt in der Praxis bei Biegebeanspruchungen in Richtungen außerhalb der Ebene oft zu einem Bruch.
- Eine Vielzahl von Bohrungen und Kerbstellen verursachen ein stark unausgeglichenes Spannungsbild mit hohen Spitzenwerten.
- Viele Bindenähte reduzieren das Festigkeitsniveau und fördern einen Bruch.

Die Aufgabe der Erfindung bestand darin, eine Auslöseanzeige für Gurtstraffer mit Biegeelement ohne die genannten Nachteile zu schaffen. Die Aufgabe wurde durch ein schraubenlinienförmiges Biegeelement aus Kunststoff gelöst.

Gegenstand der Erfindung ist somit eine Auslöseanzeige für Gurtstraffer in Kraftfahrzeugen, enthaltend ein schraubenlinienförmiges Biegeelement aus einem thermoplastischen Kunststoff.

Die erfindungsgemäße Auslöseanzeige erfüllt die Funktionen, wie sie für die Auslöseanzeige in dem bereits zitierten Gebrauchsmuster G 9112121.3 dargestellt wird, worauf Bezug genommen wird.

Die Auslöseanzeige gemäß der Erfindung ist vorzugsweise ein Kunststofformteil aus einem Stück.

Das schraubenlinienförmige Biegeelement hat im allgemeinen 1 bis 10 Windungen, vorzugsweise 1 bis 5 Windungen, besonders bevorzugt 2 bis 3 Windungen.

Die Windungen des schraubenlinienförmigen Biegeelements haben vorzugsweise einen trapezförmigen Querschnitt. Dadurch wird die Festigkeit verbessert und die Herstellung der Auslöseanzeige im Spritzgießverfahren ermöglicht.

Das schraubenlinienförmige Biegeelement kann elliptisch abgeflacht ausgebildet sein. Eine elliptische Form der Schraube ermöglicht den Einbau des Biegeelements in übliche Abdeckungen bei Gurtschlössern und die Einhaltung der Packaging-Vorgaben, ohne daß die Richtungsunabhängigkeit der Schraube wesentlich eingeschränkt wird.
Die Biegsamkeit des Biegeelementes kann durch Veränderung der Anzahl der Windungen der Schraube und/oder durch die Dimensionierung der Schraube angepaßt werden.

Geeignete thermoplastische Kunststoffe für die erfindungsgemäße Auslöseanzeige sind z.B. Polyamid, Polyester, Polyacetal.

Polyamide sind Polymere, deren Einheiten über Amidbindungen verbunden sind. Polyamide, die erfindungsgemäß eingesetzt werden können, sind beispielsweise in "Ullmann's encyclopedia of industrial chemistry, ed. Barbara Elvers, 5. Auflage, Vol. A21, Kapitel 'Polyamides' (S. 179-205), VCH Publishers, Weinheim-Basel-Cambridge-New York 1992" beschrieben, worauf Bezug genommen wird.

Polyester sind Polymere, die wiederholende, über eine Estergruppe verbundene Einheiten in der Polymerkette enthalten. Polyester, die erfindungsgemäß eingesetzt werden können, sind beispielsweise in "Ullmann's encyclopedia of industrial chemistry, ed. Barbara Elvers, 5. Auflage, Vol. A21, Kapitel 'Polyesters' (S. 227-251), VCH, Weinheim-Basel-Cambridge-New York 1992" beschrieben, worauf Bezug genommen wird. Polyester sind z.B. Polybutylenterephthalat (PBT) oder Polyethylenterephthalat (PET).

Polyacetale sind z.B. Polyoxymethylen-homopolymere und -copolymere.

Polyacetale, die erfindungsgemäß eingesetzt werden können, sind beispielsweise in "Ullmann's encyclopedia of industrial chemistry, ed. Barbara Elvers, 5. Auflage, Vol. A21, Kapitel 'Polyoxymethylenes' (S. 591-603), VCH, Weinheim-Basel-Cambridge-New York 1992" beschrieben, worauf Bezug genommen wird.

Das schraubenlinienförmige Biegeelement der Auslöseanzeige führt zu folgenden Vorteilen:
- hohe Verformungsfähigkeit bei Biegebeanspruchung in allen Richtungen,
- gleichmäßige Spannungsverteilung,
- Fehlen von Kerbstellen und Bindenähten,
- Kompatibiltät zu herkömmlichen Gurtstraff-Systemen mit Auslöseanzeige.

Auch bei großem Biegewinkel in beliebiger Richtung werden geringe Dehnwerte und niedrige Spannungen erzeugt. Die Bruchgefahr durch Überschreiten zulässiger maximaler Dehnwerte ist dadurch nahezu ausgeschlossen. Da das Biegeelement ohne Kerbstellen und Bindenähte herstellbar ist, wird eine hohe Stabilität bei Verformung zusätzlich gewährleistet.

Neben der isotropen Flexibilität ist bei der Auslöseanzeige gemäß der Erfindung auch in Verbindung mit den Zugseilen vor jedem Anschnallvorgang die korrekte räumliche Position des Gurtschlosses gewährleistet.

Bei trapezförmigem Querschnitt der Windungen des schraubenlinienförmigen Biegeelementes ist eine einfache Entformung im Spritzgießwerkzeug möglich. Das Biegeelement kann dadurch einfach und störungsfrei hergestellt werden.

Bei der Herstellung des Biegeelementes im Spritzgießverfahren wird eine sehr vorteilhafte gleichmäßige Molekülorientierung in dem Material erreicht, da der Querschnitt nur eine festgelegte Fließrichtung ohne Schmelzeumlenkungen und -aufteilungen zuläßt.

Aufgrund der besonderen Ausführungsform des Biegeelementes entfällt die Notwendigkeit, einen schlagzähmodifizierten Werkstoff einzusetzen. Die Verwendung eines Werkstofftyps mit höherer Festigkeit und Steifheit wird ermöglicht.

Verringerte Bauteilspannungen im erfindungsgemäßen Biegeelement und die Verbindung eines steiferen Werkstoffs mit der Folge einer reduzierten Kriechneigung des Kunststoffs verringern die Gefahr einer bleibenden Verformung nach länger andauernder Belastung erheblich.

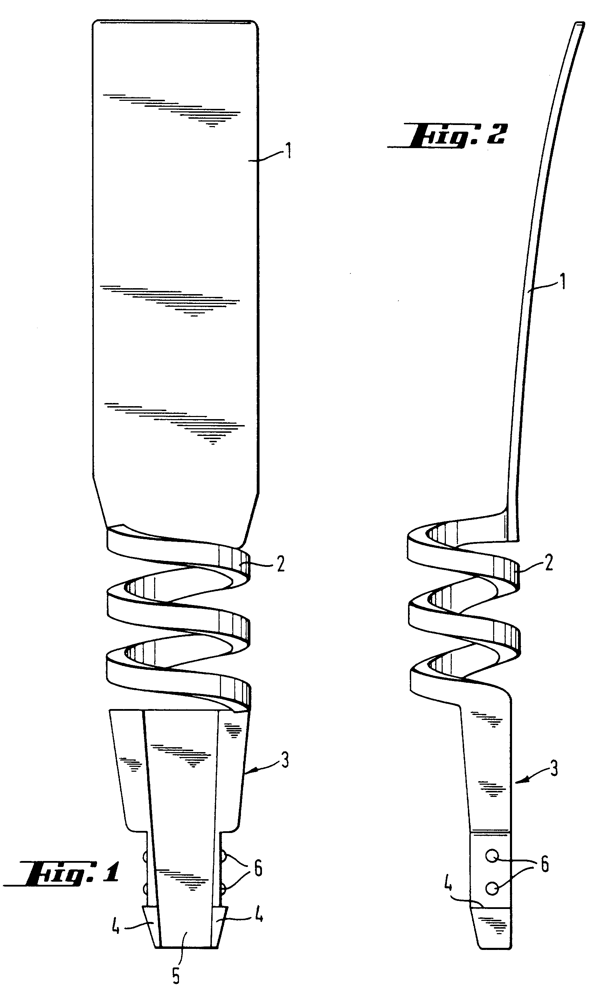

Fig. 1 (Vorderansicht) und Fig. 2 (Seitenansicht) zeigen ein Beispiel einer Auslöseanzeige gemäß der Erfindung. Die gezeigte Auslöseanzeige besteht aus einem Anzeigeteil (1), einem daran anschließenden schraubenlinienförmigen Biegeelement (2) und einem Verbindungsteil (3). Das Verbindungsteil (3) mit Rastvorsprüngen (4) und Noppen (6) dient der Rastverbindung. Das Verbindungsteil (3) ist mit einem rinnenförmigen Führungskanal (5) versehen, durch den das Seil des Gurtstraffers geführt wird.

Die in Fig. 1 und 2 gezeigte Auslöseanzeige wurde zum Beispiel im Spritzgußverfahren aus Polyoxymethylen in einem Teil hergestellt. In diesem Beispiel hat das Biegeelement 2,5 Windungen.

## Patentansprüche

1. Biegsame Auslöseanzeige für Gurtstraffer in Kraftfahrzeugen, dadurch gekennzeichnet, daß die Auslöseanzeige zwischen einem Anzeigeteil (1) und einem Verbindungsteil (3) ein schraubenlinienförmiges Biegeelement (2) aus einem thermoplastischen Kunststoff enthält.

2. Auslöseanzeige nach Anspruch 1, dadurch gekennzeichnet, daß die Auslöseanzeige in einem Stück aus dem thermoplastischen Kunststoff geformt ist.

3. Auslöseanzeige nach Anspruch 1 oder 2, dadurch gekennzeichnet, daß als thermoplastischer Kunststoff Polyamid, Polyester oder Polyacetal verwendet wird.

4. Auslöseanzeige nach Anspruch 1 oder 2, dadurch gekennzeichnet, daß als thermoplastischer Kunststoff Polyoxymethylen-Homopolymer oder Polyoxymethylen-Copolymer verwendet wird.

5. Auslöseanzeige nach den Ansprüchen 1 bis 4, dadurch gekennzeichnet, daß der Querschnitt der Windungen des schraubenlinienförmigen Biegeelementes trapezförmig ist.

6. Auslöseanzeige nach den Ansprüchen 1 bis 5, dadurch gekennzeichnet, daß das schraubenlinienförmige Biegeelement elliptisch abgeflacht ist.

7. Auslöseanzeige nach den Ansprüchen 1 bis 6, dadurch gekennzeichnet, daß das schraubenlinienförmige Biegeelement 1 bis 10 Windungen aufweist.

## Claims

1. A bendable triggering indicator for belt tensioners in motor vehicles, wherein the triggering indicator, between an indicating part (1) and a connecting part (3), includes a helical bending element (2) made of a thermoplastic material.

2. The triggering indicator as claimed in claim 1, wherein the triggering indicator is molded in one piece from the thermoplastic material.

3. The triggering indicator as claimed in claim 1 or 2, wherein polyamide, polyester or polyacetal is used as the thermoplastic material.

4. The triggering indicator as claimed in claim 1 or 2, wherein polyoxymethylene homopolymer or polyoxymethylene copolymer is used as the thermoplastic material.

5. The triggering indicator as claimed in any of claims 1 to 4, wherein the cross section of the turns of the helical bending element is trapezoidal.

6. The triggering indicator as claimed in any of claims 1 to 5, wherein the helical bending element is elliptically flattened.

7. The triggering indicator as claimed in any of claims 1 to 6, wherein the helical bending element has 1 to 10 turns.

## Revendications

1. Dispositif d'indication de déclenchement flexible pour prétensionneurs de ceinture dans des automobiles, caractérisé en ce que le dispositif d'indication de déclenchement entre une pièce d'indication (1) et une pièce de raccord (3) contient un élément flexible hélicoïdal (2) en matière plastique thermoplastique.

2. Dispositif d'indication de déclenchement suivant la revendication 1, caractérisé en ce que le dispositif d'indication de déclenchement est formé d'une pièce en matière plastique thermoplastique.

3. Dispositif d'indication de déclenchement suivant la revendication 1 ou 2, caractérisé en ce qu'on utilise comme matière plastique thermoplastique, du polyamide, du polyester ou du polyacétale.

4. Dispositif d'indication de déclenchement suivant la revendication 1 ou 2, caractérisé en ce qu'on utilise comme matière plastique thermoplastique, un homopolymère de polyoxyméthylène ou un copolymère de polyoxyméthylène.

5. Dispositif d'indication de déclenchement suivant les revendications 1 à 4, caractérisé en ce que la coupe transversale des spires de l'élément flexible hélicoïdal est trapézoïdale.

6. Dispositif d'indication de déclenchement suivant les revendications 1 à 5, caractérisé en ce que l'élément flexible hélicoïdal est aplati de manière elliptique.

7. Dispositif d'indication de déclenchement suivant les revendications 1 à 6, caractérisé en ce que l'élément flexible hélicoïdal présente 1 à 10 spires.
